# EUROPEAN PATENT SPECIFICATION

(11) **EP 4 363 926 B1**
(45) Date of publication and mention of the grant of the patent: **19.08.2026**
(21) Application number: 22753745.3
(22) Date of filing: 27.07.2022
(51) Int. Cl.: G02C 7/02, G02C 7/04, G02C 9/04, G02B 1/10, G02B 3/00, G02C 7/08, G02C 9/00

(54) **OPHTHALMIC LENSES HAVING A PHOTOPOLYMER LAYER WITH GRIN ELEMENTS**
OPHTHALMISCHE LINSEN MIT EINER PHOTOPOLYMERSCHICHT MIT GRIN-ELEMENTEN
LENTILLES OPHTALMIQUES AYANT UNE COUCHE PHOTOPOLYMÈRE AVEC DES ÉLÉMENTS GRIN

(30) Priority: 30.07.2021 US 202163227381 P
(43) Date of publication of application: 08.05.2024
(73) Proprietor: CooperVision International Limited, Fareham PO15 5RL (GB)
(72) Inventor: CHAMBERLAIN, Paul, Pleasanton, California 94588 (US); SAHA, Sourav, Pleasanton, California 94588 (US); BRADLEY, Arthur, Pleasanton, California 94588 (US); ARUMUGAM, Baskar, Pleasanton, California 94588 (US)
(74) Representative: Abel & Imray LLP
(86) International application number: PCT/GB2022/051976
(87) International publication number: WO 2023/007159

(56) References cited:
- EP-A1- 3 816 677
- CN-U- 213 601 010
- US-A1- 2001 048 968
- US-A1- 2011 051 079
- US-A1- 2016 377 886
- US-A1- 2017 269 379
- US-A1- 2020 073 147

## Description

This application claims the benefit under 35 U.S.C. §119(e) of prior U.S. Provisional Patent Application No. 63/227,381, filed July 30, 2021.

The present disclosure concerns ophthalmic lenses having a layer including gradient index refractive elements, and methods of manufacturing such lenses.

### Background

Many people, including children and adults require ophthalmic lenses to correct for myopia (short-sightedness), and many adults require ophthalmic lenses to correct for presbyopia (an age-related inability to accommodate and hence inability to focus on near objects). Ophthalmic lenses may also be required to correct for hyperopia (far-sightedness), astigmatism, or keratoconus (a condition whereby the cornea gradually bulges to form a cone shape).

Myopic eyes focus incoming light from distant objects to a location in front of the retina. Consequently, the light converges towards a plane in front of the retina and diverges towards, and is out of focus upon arrival at, the retina. Conventional lenses (e.g., spectacle lenses and contact lenses) for correcting myopia reduce the convergence (for contact lenses), or cause divergence (for spectacle lenses) of incoming light from distant objects before it reaches the eye, so that the location of the focus is shifted onto the retina. It was suggested several decades ago that progression of myopia in children or young people could be slowed or prevented by under-correcting, i.e., moving the focus towards but not quite onto the retina. However, that approach necessarily results in degraded distance vision compared with the vision obtained with a lens that fully corrects for myopia. Moreover, it is now regarded as doubtful that under-correction is effective in controlling developing myopia. A more recent approach is to provide lenses having both regions that provide full correction of distance vision and regions that under-correct, or deliberately induce, myopic defocus. Lenses may also be provided that increase scattering of light in certain regions, compared to light passing through the fully correcting region of the lens. It has been suggested that these approaches can prevent or slow down the development or progression of myopia in children or young people, whilst providing good distance vision.

In the case of lenses having a region that provide defocus, the regions that provide full-correction of distance vision are usually referred to as base power regions and the regions that provide under-correction or deliberately induce myopic defocus are usually referred to as add power regions or myopic defocus regions (because the dioptric power is more positive, or less negative, than the power of the distance regions). A surface (typically the anterior surface) of the add power region(s) has a smaller radius of curvature than that of the distance power region(s) and therefore provides a more positive or less negative power to the eye. The add power region(s) are designed to focus incoming parallel light (i.e., light from a distance) within the eye in front of the retina (i.e. closer to the lens), whilst the distance power region(s) are designed to focus light and form an image at the retina (i.e. further away from the lens).

In the case of lenses that increase scattering of light in a certain region, features that increase scattering may be introduced into a lens surface or may be introduced into the material that is used to form the lens. For example, scattering elements may be burned into the lens, or embedded in the lens. Scattering elements may be laser ablated optical elements embedded in the lens material.

A known type of contact lens that reduces the progression of myopia is a dual-focus contact lens, available under the name of MISIGHT (CooperVision, Inc.). This dual-focus lens is different than bifocal or multifocal contact lenses configured to improve the vision of presbyopes, in that the dual-focus lens is configured with certain optical dimensions to enable a person who is able to accommodate to use the distance correction (i.e., the base power) for viewing both distant objects and near objects. The treatment zones of the dual-focus lens that have the add power also provide a myopically defocused image at both distant and near viewing distances.

Whilst these lenses have been found to be beneficial in preventing or slowing down the development or progression of myopia, annular add power regions can give rise to unwanted visual side effects. Light that is focused by the annular add power regions in front of the retina diverges from the focus to form a defocused annulus at the retina. Wearers of these lenses therefore may see a ring or 'halo' surrounding images that are formed on the retina, particularly for small bright objects such as street lights and car headlights. Also, rather than using the natural accommodation of the eye (i.e., the eye's natural ability to change focal length) to bring nearby objects into focus, in theory, wearers can make use of the additional focus in front of the retina that results from the annular add power region to focus near objects; in other words, wearers can inadvertently use the lenses in the same manner as presbyopia correction lenses are used, which is undesirable for young subjects.

Further lenses have been developed which can be used in the treatment of myopia, and which are designed to eliminate the halo that is observed around focused distance images in the MISIGHT (CooperVision, Inc.) lenses and other similar lenses described above. In these lenses, the annular region is configured such that no single, on-axis image is formed in front of the retina, thereby preventing such an image from being used to avoid the need for the eye to accommodate near targets. Rather, distant point light sources are imaged by the annular region to a ring-shaped focal line at a near add power focal surface, leading to a small spot size of light, without a surrounding 'halo' effect, on the retina at a distance focal surface.

It has been recognised that known lenses that include treatment portions for introducing myopic defocus are typically designed to provide a specific treatment to a lens wearer. The lenses may be expensive and complex in design, and over time, if the lens wearer's requirements change, they may need to purchase different lenses providing different levels of correction.

Lenses of the prior art are disclosed in US2020/073147A1.

The present invention seeks to provide a simple and cost effective alternative to known lenses for use in preventing or slowing of the worsening of myopia. Such lenses may also be beneficial in correcting or improving vision associated with presbyopia, hyperopia, astigmatism, keratoconus or other refractive anomalies.

### Summary

According to a first aspect, the present disclosure provides an ophthalmic lens according to claim 1.

According to a second aspect, the present disclosure provides a method of manufacturing an ophthalmic lens according to claim 14.

It will of course be appreciated that features described in relation to one aspect of the present disclosure may be incorporated into other aspects of the present disclosure according to the claimed subject-matter.

### Description of the Drawings

FIG. 1A is a schematic top view of a spectacle lens with a layer having a base refractive index provided on a surface of the lens, the layer including a plurality of GRIN optical elements, according to an embodiment of the present disclosure;
FIG. 1B is a cross-section view of the lens of FIG. 1A;
FIG. 1C is a perspective view of a pair of spectacles including lenses as shown in FIG. 1A and 1B, which are lenses according to an embodiment of the present disclosure;
FIG. 2A is a schematic top view of a contact lens with a layer having a base refractive index provided on a surface of the lens, the layer including a plurality of GRIN optical elements, according to an embodiment of the present disclosure;
FIG. 2B is a cross-section view of the lens of FIG. 2A;
FIG. 3 is a schematic top view of a lens having a layer including an annular region surrounding a central region, wherein the annular region includes a plurality of GRIN elements arranged on lattice points of a triangular lattice (the lattice lines are shown for illustrative purposes and are not physical lines), according to an embodiment of the present disclosure;
FIG. 4 is a schematic top view of a lens having a layer including a plurality of GRIN elements arranged on lattice points of a square lattice (the lattice lines are shown for illustrative purposes and are not physical lines), according to an embodiment of the present disclosure;
FIG. 5 is a graph showing the refractive index variation of a GRIN element according to an embodiment of the present disclosure;
FIG. 6 is a schematic top view of a lens having a layer including an annular region surrounding a central region, wherein a portion of the annular region includes a plurality of GRIN elements, according to an embodiment of the present disclosure;
FIG. 7A shows a cross-section through a layer applied to a lens, wherein the layer includes a plurality of GRIN elements, according to an embodiment of the present disclosure;
FIG. 7B shows a cross-section through a layer applied to a lens, wherein the layer includes a plurality of cuboidal GRIN scattering elements, according to an embodiment of the present disclosure;
FIG. 7C shows a cross-section through a layer applied to a lens, wherein the layer includes a plurality of spherical GRIN scattering elements, each element having a refractive index that varies radially outwards from the centre of each element , according to an embodiment of the present disclosure;
FIG. 8 is a schematic top view of a lens having a layer including two concentric annular regions surrounding a central region, wherein each annular region includes a plurality of GRIN elements, according to an embodiment of the present disclosure; and
FIG. 9 is a schematic top view of a lens having a layer including a plurality of concentric annular regions, wherein each annular region has an oscillating variation in refractive index, according to an embodiment of the present disclosure.

### Detailed Description

According to a first aspect, the present disclosure provides an ophthalmic lens as defined in claim 1.

The lens may be for preventing or slowing the development or progression of myopia. The lens may be a lens for correcting or improving vision associated with presbyopia, hyperopia, astigmatism, keratoconus or another refractive anomaly.

The layer may cover an entire lens surface, or substantially all of a surface of the lens. Alternatively, the layer may cover a portion of a lens surface. The layer may cover a central portion of a lens surface, for example, a portion that is configured to be situated in front of a lens wearer's eye. The layer may cover an annular region surrounding the centre of the lens. There may be a peripheral region of the lens that is not covered by the layer.

The base refractive index of the layer may be constant. The base refractive index of the layer may be between 1.3 and 1.8, preferably about 1.5. Each of the GRIN optical elements may have an average refractive power that is greater than the base refractive power. Alternatively, each of the GRIN optical elements may have an average refractive power that is less than the base refractive power.

In the context of the present disclosure, each of the gradient index (GRIN) optical elements is an element that has a varying refractive index. The variation in refractive index is a transverse variation in refractive index across the element. i.e., in a direction that runs parallel to a surface of the layer. The variation in refractive index also is a radial variation in refractive index, i.e., the refractive index may vary extending radially outwardly from a point. The variation in refractive index may be an axial variation in refractive index, i.e., in a direction that runs normal to a surface of the layer. Each of the GRIN optical elements has a transverse variation in refractive index and may have an axial variation in refractive index. The variation in refractive index of each of the GRIN optical elements may be a linearly varying gradient in refractive index, or a gradient that has a varying profile defined by a quadratic function.

The GRIN elements may be lenses. Advantageously, the GRIN elements may provide defocusing. It is believed that defocusing may help to prevent or slow of the worsening of myopia. It is believed that defocusing may help to correct or improve vision associated with presbyopia, hyperopia, astigmatism, keratoconus or other refractive anomalies.

Each of the GRIN optical elements may give rise to additional scattering of light that falls incident on the GRIN optical element, compared to light falling incident on the remainder of the layer. Alternatively, each of the GRIN optical elements may give rise to reduced scattering of light that falls incident on the GRIN optical element, compared to light falling incident on the remainder of the layer. Each of the GRIN optical elements may have a minimum change in refractive index, compared to the base refractive index, of at least 0.001, preferably at least 0.005. Each of the GRIN optical elements may have a minimum refractive index that is 0.001 greater than the base refractive index. Each of the at least one GRIN optical elements may have a minimum refractive index that is 0.005 greater than the base refractive index. Each of the GRIN optical elements may have a maximum refractive index that is 0.005 less than the base refractive index. Each of the GRIN optical elements may have a maximum refractive index that is 0.001 less than the base refractive index. Each of the GRIN optical elements may have a maximum change in refractive index, compared to the base refractive index of less than 0.1, preferably less than 0.025. Each of the GRIN optical elements may have a maximum refractive index that is 0.1 greater than the base refractive index. Each of the GRIN optical elements may have a maximum refractive index that is 0.025 greater than the base refractive index. Each of the at least one GRIN optical elements may have a minimum refractive index that is 0.1 less than the base refractive index. Each of the GRIN optical elements may have a minimum refractive index that is 0.025 less than the base refractive index. Each of the GRIN optical elements may have a minimum refractive power that is between -25 D and 25 D, preferably between -0.25D and 25 D.

Each of the GRIN optical elements may extend through the thickness of the layer. Each of the GRIN optical elements may extend partway through the thickness of the layer. Each of the GRIN optical elements may be embedded within the layer

The layer may be a cross-linked polymeric layer including at least one GRIN optical element. The layer may have been formed from a matrix of uncross-linked polymers.

The layer may be provided on an anterior surface of the lens. In the context of the present disclosure, the anterior surface of the lens is the forward facing, or exterior surface of the lens when the lens is being worn by a lens wearer.

The layer may be a film that has been applied to a surface of the lens. The layer may comprise a Bayfol^{®} HX film. The layer may be a film that is applied to the lens during manufacture of the lens. The layer may be permanently adhered or otherwise applied to the lens. The layer may be releasably adhered or otherwise applied to the lens, i.e., it may be readily removable from the lens. The layer may be re-usable, such that layer can be easily removed and reapplied to the same lens or to a different lens.

The layer may be a coating provided on a surface of the lens. The coating may be applied to the lens during the lens manufacture process. The coating may bond to a surface of the lens. The coating may be irreversibly applied to the lens, for example, bonding between the coating and the lens may be permanent bonding.

The lens may be a spectacle lens. The lens may be circular in shape. The lens may be elliptical in shape. The lens may be oval in shape. The lens may be rectangular in shape. The lens may be square in shape. The anterior surface of the lens may have an area of between 1200mm² and 3000mm². The lens may be formed from transparent glass or rigid plastic such as polycarbonate. The lens may be substantially planar and may have at least one curved surface providing a lens power.

The lens may be a contact lens. As used herein, the term contact lens refers to an ophthalmic lens that can be placed onto the anterior surface of the eye. It will be appreciated that such a contact lens will provide clinically acceptable on-eye movement and not bind to the eye or eyes of a person. The contact lens may be in the form of a corneal lens (e.g., a lens that rests on the cornea of the eye). In embodiments where the lens is a contact lens, the lens may have a surface area of between 60mm² and 750mm². The lens may have a circular shape. The lens may have an oval shape. The lens may have an elliptical shape. The lens may have a diameter of between 10mm and 15mm.

The lens may be a rigid contact lens. The lens may be a rigid, gas permeable contact lens.

The contact lens may be a toric contact lens. For example, the toric contact lens may include an optic zone shaped to correct for a person's astigmatism.

The lens may be a soft contact lens, such as a hydrogel contact lens or a silicone hydrogel contact lens.

The lens may comprise an elastomer material, a silicone elastomer material, a hydrogel material, or a silicone hydrogel material, or combinations thereof. As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). In some embodiments, the hydrogel material or silicone hydrogel material has an EWC from about 30% to about 70% (wt/wt). In comparison, a silicone elastomer material, as described in the context of the present disclosure, has a water content from about 0% to less than 10% (wt/wt). Typically, the silicone elastomer materials used with the present methods or apparatus have a water content from 0.1% to 3% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, lehfilcon A, and the like.

Alternatively, the lens may comprise, consist essentially of, or consist of a silicone elastomer material. For example, the lens may comprise, consist essentially of, or consist of a silicone elastomer material having a Shore A hardness from 3 to 50. The Shore A hardness can be determined using conventional methods, as understood by persons of ordinary skill in the art (for example, using a method DIN 53505). Other silicone elastomer materials can be obtained from NuSil Technology or Dow Chemical Company, for example.

The lens may have an optic zone. The optic zone encompasses parts of the lens that have optical functionality. The optic zone is configured to be positioned over or in front of the pupil of an eye when in use. The optic zone may be surrounded by a peripheral zone. The peripheral zone is not part of the optic zone, but sits outside the optic zone. For a contact lens, the peripheral zone may sit above the iris when the lens is worn. The peripheral zone may provide mechanical function, for example, increasing the size of the lens thereby making the lens easier to handle. For a contact lens, the peripheral zone may provide ballasting to prevent rotation of the lens, and/or providing a shaped region that improves comfort for the lens wearer. The peripheral zone may extend to the edge of the lens. In embodiments of the present disclosure the layer may cover the optic zone, but it may be that it does not cover the peripheral zone.

The layer may have a uniform thickness. For a contact lens, the layer may have a thickness of between 1 µm and 100 µm, preferably between 10 µm and 20 µm, and more preferably between 14 µm and 18 µm. For a spectacle lens, the layer may have a thickness of between 1 µm and 1000 µm, preferably between 10µm and 20µm, and more preferably between 14 µm and 18 µm.

According to the claimed subject-matter, the layer comprises a plurality of GRIN elements distributed across an area of the layer. The plurality of GRIN optical elements may be distributed across the whole area layer. The plurality of GRIN optical elements may be distributed across a portion of the layer. The plurality of GRIN optical elements may be randomly distributed across all or a portion of the layer. The GRIN optical elements may be arranged in a regular pattern across all or a portion of the layer. For a spectacle lens, it may be advantageous to provide a plurality of GRIN distributed across an area of the lens, as this may enable defocus (caused by the GRIN elements) to be maintained as the lens wearers eye moves relative to the lens. A plurality of GRIN elements distributed across a spectacle lens may enable a consistent myopic defocus to be maintained.

The GRIN optical elements may be positioned at regular intervals across the whole layer or a portion of the layer. The GRIN optical elements may be arranged on lattice points of a triangular lattice. The GRIN optical elements may be arranged on lattice points of a square or rectangular lattice. The GRIN optical elements may be arranged to form an annular pattern on the layer. The annular pattern may leave a central region of the lens free from GRIN optical elements. The lens may have a central region having a diameter of up to 8mm may be free from GRIN optical elements. The annular pattern may comprise a single annulus or a plurality of concentric annuli.

The layer may be a photopolymer layer. Each of the gradient index optical elements may be a photocured gradient index optical element. Each GRIN optical element may have been formed using photocuring.

Each of the gradient index optical elements may have a radially varying refractive index profile defined by a quadratic function. Each of the GRIN optical elements may have varying refractive index profile defined by a higher order polynomial function. Each of the GRIN optical elements may have varying refractive index profile defined by a Gaussian function.

Each of the plurality of GRIN elements may have the same variation in refractive index. Each of the plurality of GRIN elements may have a different variation in refractive index. Some of the GRIN elements may have the same variation in refractive index, and other elements may have a different variation in refractive index. A plurality of GRIN optical elements may be distributed such that GRIN optical elements having the same or a similar variation in refractive index may be grouped in clusters or in an ordered arrangement. The film may be dividable into a plurality of distinct portions, with each portion comprising GRIN optical elements having a different variation in refractive index.

Each of the at least one gradient index optical elements may have a width of between 10 µm and 5 mm. Each of the GRIN optical elements have a volume of between 100 µm³ and 3 mm³. The plurality of GRIN optical elements may occupy between 5% and 80% of the volume of the layer. The plurality of gradient index optical elements may cover between 20% and 80% of a surface area of the layer. The layer may include between 2 and 5000 gradient index optical elements.

Each of the GRIN optical elements may extend through the thickness of the layer. Each of the GRIN elements may extend through part of the thickness of the layer. Each of the GRIN elements may be dispersed within the layer. Each of the GRIN elements may be approximately cuboidal or spherical in shape.

The lens may have a central region and an annular region surrounding the central region. The layer that includes each of the gradient index optical elements may cover a portion of the annular region. It may be that the layer does not cover the central region, and the central region may therefore be free from GRIN optical elements. The layer may cover all of the annular region, or part of the annular region. As used herein, the term annular region refers to a region that may extend around the entire outer edge of the central region, or may extend partially around the outer edge of the central region. The annular region may be circular, oval or elliptical in shape. The annular region may include a plurality of GRIN optical elements. The plurality of GRIN optical elements may be distributed around the entire annular region, or may be distributed across a portion of the annular region. The plurality of gradient index optical elements may be arranged periodically around the annular region. The layer may include a plurality of concentric annular regions, and each of the concentric annular regions may include at least one GRIN optical element. Each concentric annular region may include a plurality of GRIN elements. A plurality of GRIN optical elements may cover a portion of each annular region. Using the angle θ to define the position around the annular region, wherein θ varies between 0° and 360°, a plurality of GRIN optical elements may cover the same range of θ angles for each annular region (i.e. the GRIN elements may be in phase for each annular region, with maxima and minima at the same θ values for each annular region), or may occupy different ranges of θ angles (i.e. the GRIN elements may be out of phase for each annular region, with maxima and minima at different θ values for each element). At least one GRIN element in a first annular region may therefore be out of phase with at least one GRIN element in an adjacent second annular region. At least one GRIN element in a first annular region may be in phase with at least one GRIN element in an adjacent second annular region.

If the layer includes a plurality of concentric annular regions, the variation in refractive index around each of the annular regions may be in phase, or out of phase.

The layer may include a plurality of concentric annular regions that are radially separated by a region of the layer having the base refractive index. Alternatively, the layer may include a plurality of concentric annular regions that are adjacent to each other, such that there is not a region having the base refractive index between the annular concentric gradient index optical elements.

The layer may have a thickness of between 1 µm and 70 µm.

The lens may further comprise an adhesive provided between the layer and the surface of the lens. The adhesive may comprise a transparent adhesive such as an epoxy-based adhesive. The adhesive may be an adhesive layer. The adhesive layer may be applied to an anterior surface of the lens during manufacture of the lens. The adhesive layer may be applied to a posterior surface of the layer during manufacture of the lens. The adhesive may permanently adhere the layer to the surface of the lens. Alternatively, the layer may be bonded to the surface of the lens. The layer may be permanently, or irreversibly bonded to the surface of the lens.

The lens may further comprise a protective layer provided on an anterior surface of the layer that includes at least one gradient index optical element. The anterior surface of the layer that includes GRIN optical element is the forward facing, or exterior surface of the layer when the lens is in normal use and being worn by a lens wearer. The protective layer may cover all or part of the anterior surface of the layer that includes the plurality of GRIN optical elements. The protective layer may be a transparent layer. The protective layer may comprise polycarbonate (PC). The protective layer may comprise polyethylene terephthalate (PET) or cellulose triacetate (TAC). The protective layer may comprise a substance that has negligible birefringence. The protective layer may be impermeable to water. The protective layer may be scratch resistant. The protective layer may have the base refractive index. The protective layer may offer a degree of UV protection. The protective layer may be adhered to layer using an adhesive.

According to a second aspect, the present disclosure provides a method of manufacturing an ophthalmic lens. The lens has a layer provided a surface of the lens. The layer has a base refractive index and includes a plurality of gradient index optical element. The method comprises providing an ophthalmic lens and applying a coating or film to the lens to form the layer. The lens may include any of the features set out above. Providing the lens may comprise manufacturing the lens. Manufacturing the lens may comprise forming a female mold member with a concave lens forming surface and a male mold member with a convex lens forming surface. The method may comprise filling a gap between the female and male mold members with bulk lens material. The method may further comprise curing the bulk lens material to forms the lens.

The lens may be a molded contact lens. The lens can be formed by cast molding processes, spin cast molding processes, or lathing processes, or a combination thereof. As understood by persons skilled in the art, cast molding refers to the molding of a lens by placing a lens forming material between a female mold member having a concave lens member forming surface, and a male mold member having a convex lens member forming surface.

The layer may be a film. The step of applying the film to the lens may comprise using an adhesive to adhere the layer to the lens. The adhesive may be a transparent adhesive. The adhesive may be applied to a posterior surface of the layer including a plurality of GRIN elements. The adhesive may be applied to an anterior surface of the lens prior to application of the layer including a plurality of GRIN elements.

Alternatively, the layer may comprise a coating. A coating may be applied directly onto a lens surface by various coating methods, such as spray coating, spin coating, solution casting, liquid phase surface deposition, or gas phase surface deposition. Prior to applying the coating to a lens surface, the lens surface may be treated, for example, using plasma treatment, to improve the bonding or adhesion with the coating layer.

The step of forming the layer may comprise photocuring at least one region of a photocurable layer, thereby producing at least one photocured gradient index optical element. A digital light projection system may be used to photocure at least one region of the photocurable layer. Alternatively, a direct laser writing system may be used to photocure at least one region of the photocurable layer. Alternatively, a collimated LED/laser light source may be used to photocure at least one region of the photocurable layer. A high resolution 3D photocurable system, such as a two photon confocal microscope based laser illumination system may be used to photocure at least one region of the photocurable layer.

In the example embodiments described below, the lens may be a spectacle lens or a contact lens. The lens may have a circular shape. The lens may have an oval shape. The lens may have an elliptical shape. In the case of a spectacle lens, the lens may have an area between 300 mm² and 5000 mm², preferably between 1000 mm² and 3000 mm². In the case of a contact lens, the lens may have a surface area of between 60 mm² and 750 mm². A contact lens may have a diameter of between 6 mm and 20 mm, preferably between 9 mm and 16 mm.

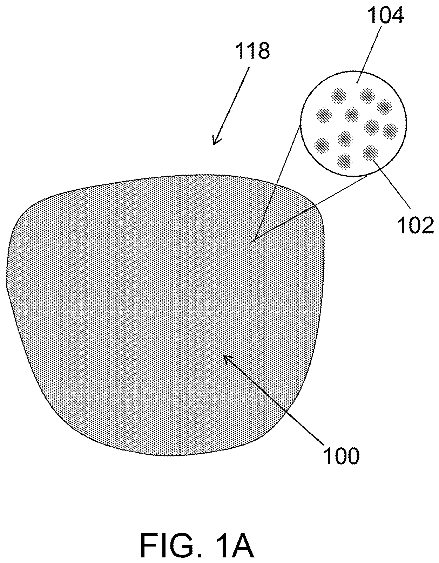

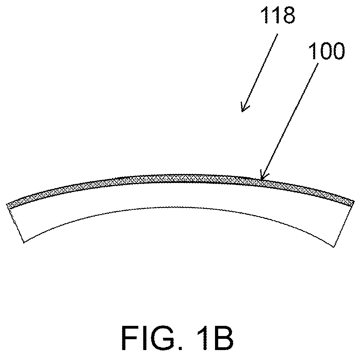

FIG. 1A is a schematic top view of a spectacle lens 118 with a layer 100 having a base refractive index provided on an anterior surface of the lens 118, the layer 100 including a plurality of GRIN optical elements 102, according to an embodiment of the present disclosure. The layer 100 is in the form of a film. The base refractive index of the film 100 is constant and the film has a uniform thickness. The layer 100 includes a plurality of GRIN optical elements 102. The layer 100 covers the anterior surface of the lens 118. The GRIN optical elements 102 each have a gradient of refractive index that varies continuously and transversely across the element in a direction parallel to the anterior surface of the layer 100. Each element 102 has the same variation in refractive index. Light that is incident on the GRIN elements 102 in a direction that is substantially perpendicular to the layer 100 is scattered more in comparison to light that falls incident on the remainder 104 of the layer 100 that has the base refractive index. The GRIN elements 102 are distributed at regular intervals across a surface of the film 100, covering about 70% of one of the surfaces of the film. Each of the GRIN optical elements 102 is a photo cured optical element. FIG. 1B is a cross-sectional of the lens 118 of FIG. 1A, showing the layer 100 provided on the anterior surface of the lens 118.

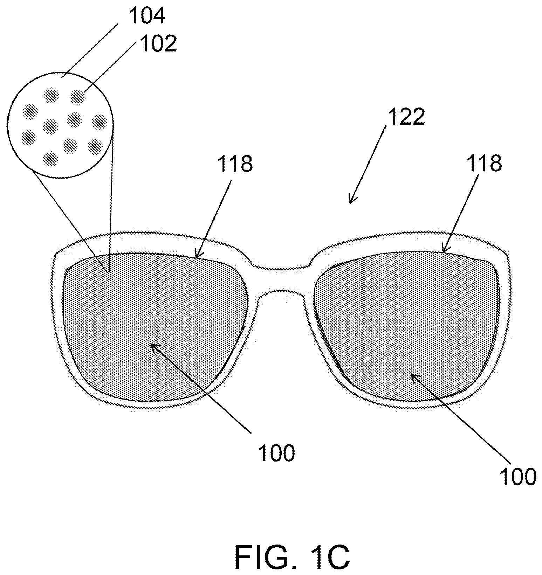

FIG. 1C is a perspective view of a pair of spectacles 122 including lenses 118 as shown in FIG. 1A. The pair of spectacles 122 contains two of the lenses described in FIG. 1A, which in front of the pupil of the eye of the wearer if the lens was in use. As described above, the layer 100 covers the anterior surface of each spectacle lens 118. The layer 100 includes a plurality of GRIN optical elements 102, and the remainder 104 of the layer has the base refractive index.

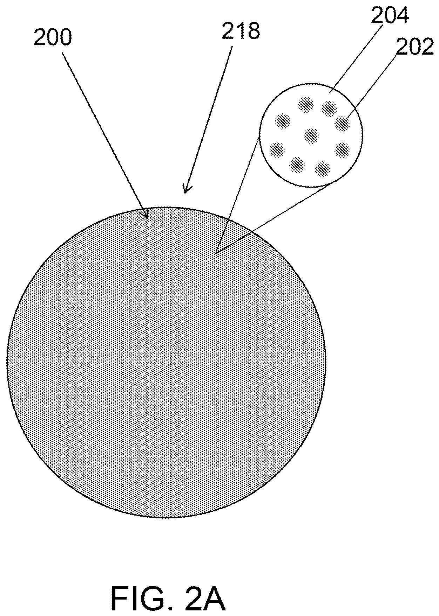

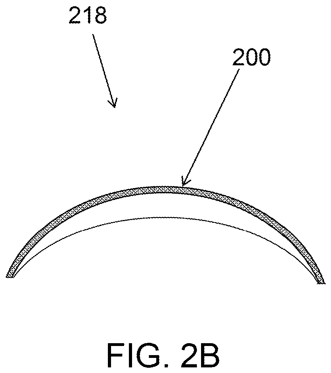

FIG. 2A is a schematic top view of a contact lens 218 with a layer 200 having a base refractive index provided on a surface of the lens 218, the layer 200 including a plurality of GRIN optical elements 202, according to an embodiment of the present disclosure. The layer 200 covers the anterior surface of the lens 218 and has a uniform thickness. The GRIN elements 202 cover about 70% of the anterior surface of the layer 200. The base refractive index of the layer 200 is constant. GRIN optical elements 202 are distributed at regular intervals across the surface of the layer 200. The GRIN optical elements 202 each have a gradient of refractive index that varies continuously and transversely across the element 202 and each element 202 has the same variation in refractive index. Light that is incident on the GRIN elements 202 is scattered more in comparison to light that falls incident on the remainder 204 of the layer 200 that has the base refractive index. The layer 200 comprises a coating that is applied to the lens 218 during the manufacturing process. FIG. 2B is a side on view of the lens 218 displayed in FIG. 2A.

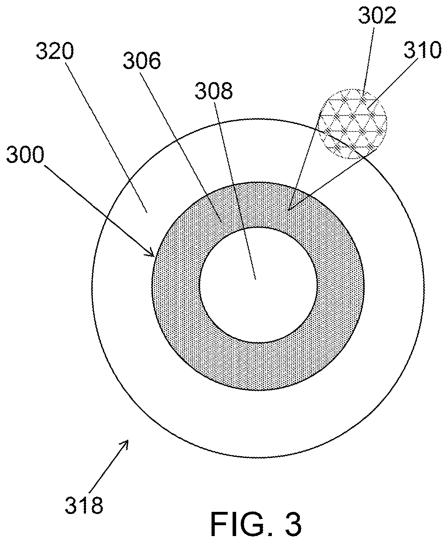

FIG. 3 is a schematic top view of a contact lens 318, similar to the lens 218 shown in FIG. 2A. The contact lens 318 has a layer 300 provided on the anterior surface of the lens 318. The layer 300 has an annular shape, covering an annular region 306 of the lens 300, and surrounds a central region 308 of the lens 318. The layer 300 includes a plurality of GRIN optical elements 302 arranged on lattice points of a triangular lattice 310, according to an embodiment of the present disclosure. The lattice lines are shown for illustrative purposes and are not physical lines. The layer 300 has a uniform thickness. The GRIN elements 302 span about 70% of the anterior surface of the layer 300. The base refractive index of the layer 300 is constant. GRIN optical elements 302 are arranged on lattice points of a triangle lattice 310 across the surface of the layer 300. A central region 308 of the lens 318 is not covered by the layer 300, and therefore this central region 308 does not include any GRIN elements. A peripheral region 320 of the lens 318 is also not covered by the layer 300, and therefore does not include any GRIN elements 302. The GRIN optical elements 302 each have a gradient of refractive index that varies continuously and transversely across the element 302 and each element 302 has the same variation in refractive index.

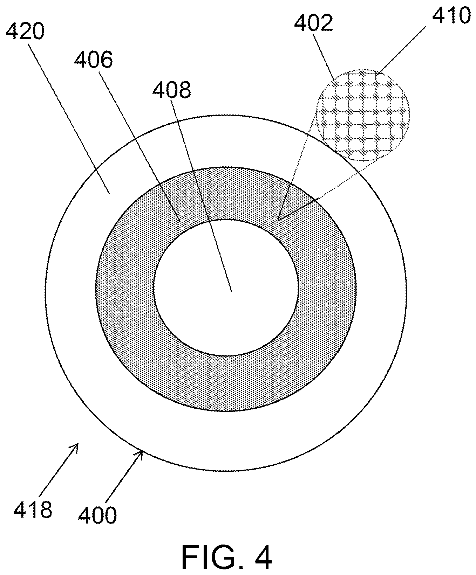

FIG. 4 is a schematic top view of a contact lens 418, similar to the lens 318 shown in FIG. 3. The contact lens 418 has a layer 400 provided on the anterior surface of the lens 418. A portion of the layer 400 which covers a central region 408 of the lens 418 is free from GRIN optical elements 402. A portion of the layer 400 which covers a peripheral region 420 of the lens 418 is also free from GRIN optical elements 402. A portion of the layer 400 which covers an annular region 406 of the lens 400 includes a plurality of GRIN elements 402 arranged on lattice points of a square lattice 410, according to an embodiment of the present disclosure. The lattice lines are shown for illustrative purposes and are not physical lines. The GRIN optical elements 402 each have a gradient of refractive index that varies continuously and transversely across the element 402 and each element 402 has the same variation in refractive index.

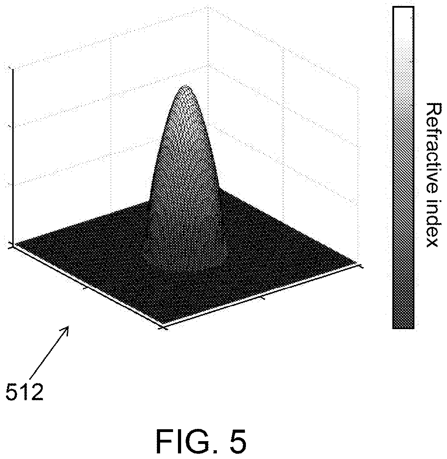

FIG. 5 is a graph 512 showing the refractive index variation of a GRIN element that may be included in a layer according to an embodiment of the present invention. The GRIN element has a varying refractive index profile defined by a quadratic function, such that the greatest refractive index is at the centre of the element, and the refractive index decreases radially outwards from the centre of the element. The variation in refractive index causes increased scattering of light that is incident upon the GRIN optical element in comparison to an area of film that does not contain a GRIN optical element.

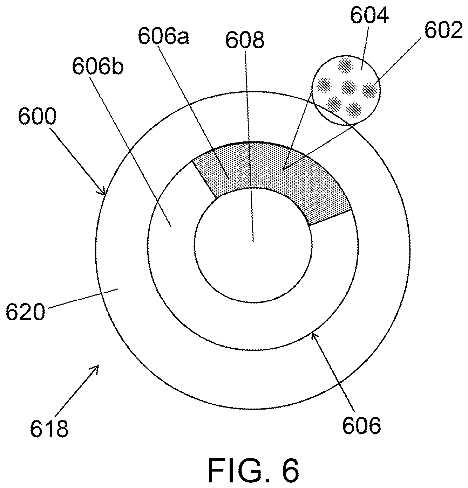

FIG. 6 is a schematic top view of a contact lens 618 having a layer 600 including an annular region 606 (which is shown as regions 606a and 606b) surrounding a central region 608, wherein a portion of the annular region 606a includes a plurality of GRIN elements 602, according to an embodiment of the present disclosure. A portion of the layer 600 which covers a peripheral region 620 of the lens 618 is also free from GRIN optical elements 602. The contact lens 618 is similar to that described in FIGS. 2A-B, however in this embodiment the GRIN optical elements 602 are regularly distributed across the surface of a portion 606a of the annular region, the remainder of the annular region 606b does not contain any GRIN optical elements 602. Light that is incident on the GRIN elements 602 is scattered more in comparison to light that falls incident on the remainder 604 that has the base refractive index.

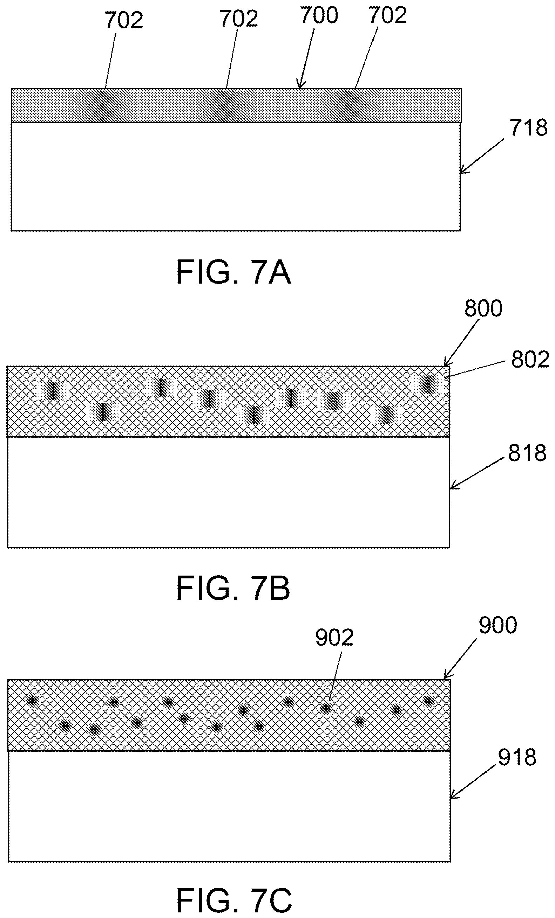

FIG. 7A shows a cross-section through a layer 700 applied to a lens 718, wherein the layer 700 includes a plurality of GRIN elements 702, according to an embodiment of the present disclosure. The GRIN optical elements 702 are distributed at regular intervals across the surface of the layer 700. The layer 700 is in the form of a film. The GRIN optical elements 702 each have a gradient of refractive index that varies continuously and transversely across the element in a direction parallel to a surface of the film. The refractive index of each GRIN optical element 702 is constant in a direction perpendicular a surface of the film. Each element 702 has the same variation in refractive index. The base refractive index of the film 700 is constant and the film 700 has a uniform thickness. The film 700 is applied to the lens 718 during the manufacturing process.

FIG. 7B shows a cross-section through a layer 800 applied to a lens 818, wherein the layer 800 includes a plurality of cuboidal GRIN elements 802, according to an embodiment of the present disclosure. The layer 800 is in the form of a film, and the GRIN optical elements 802 are photo cured optical elements which are dispersed within the thickness of the layer 800. The GRIN optical elements 802 each have a gradient of refractive index that varies radially outwards from the centre of the element 802 in a direction parallel to a surface of the layer 800. Each element 802 has the same variation in refractive index. The base refractive index of the film 800 is constant and the film 800 has a uniform thickness. The film 800 is applied to the lens 818 during the manufacturing process.

FIG. 7C shows a cross-section through a layer 900 applied to a lens 918, wherein the layer 900 includes a plurality of spherical GRIN elements 902, according to an embodiment of the present disclosure. The layer 900 is in the form of a film, and the GRIN optical elements 902 are photo cured optical elements which are dispersed within the thickness of the film 900. The GRIN optical elements 902 each have a gradient of refractive index that varies radially outwards from the centre of the element 902 and each element 902 has the same variation in refractive index. The base refractive index of the film 900 is constant and the film 900 has a uniform thickness. The film 900 is applied to the lens 918 during the manufacturing process.

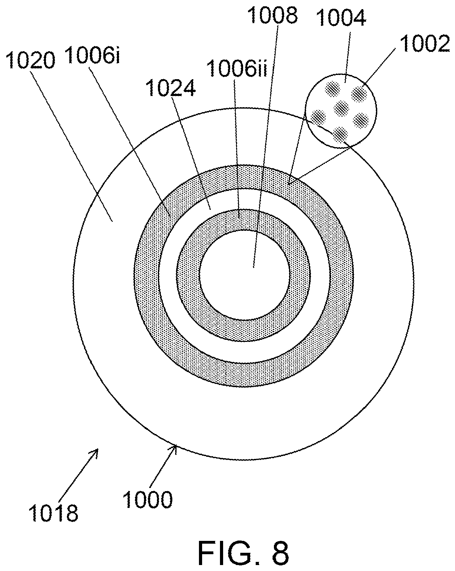

FIG. 8 is a schematic top view of a contact lens 1018, having a layer 1000 including two concentric annular regions 1006i and 1006ii surrounding a central region 1008, wherein each annular region includes a plurality of GRIN elements 1002, according to an embodiment of the present disclosure. The GRIN optical elements 1002 each have a gradient of refractive index that varies continuously and transversely across the element 1002 and each element 1002 has the same variation in refractive index. The concentric annular regions 1006i and 1006ii are separated by an annular region 1024 of the layer 1000 that has the base refractive index. GRIN optical elements 1002 are distributed at regular intervals across the surface of the concentric annular regions 1006i and 1006ii. The region of the layer 1000 that covers the central portion 1008 of the lens does not contain any GRIN optical elements 1002. The region of the layer 1000 that covers the peripheral region 1020 of the lens 1018 does not contain any GRIN optical elements 1002. Each of the GRIN optical elements 1002 has an average refractive power that is greater than the base refractive power (of the remainder 1004) that has the base refractive index.

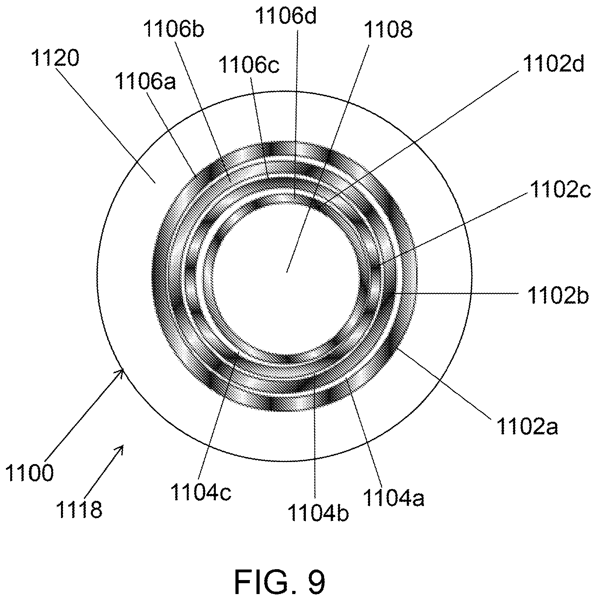

FIG. 9 is a schematic top view of a lens 1118, having a layer 1100 including an annular peripheral region 1120 surrounding a central region 1108, and layer 1100 including a plurality of concentric annular regions 1106a-d, each annular region 1106a-d including a plurality of GRIN optical elements 1102a-d, according to an embodiment of the present disclosure. The GRIN optical elements (one of 1102a-d) are distributed around each annular region 1106a-d such that the positioning of the GRIN optical elements 1102b around one of the annular regions 1106b, is out of phase with the positioning of the GRIN optical elements (1102a and 1102c) in the adjacent annular regions 1106a/1106c. The concentric annular regions 1106a-d are radially separated by a region of layers 1104a-c that has the base refractive index. In other embodiments of the present disclosure (not shown), concentric annular regions may be adjacent to each other, i.e., not separated by regions having the base refractive index.

Whilst the present disclosure has been described and illustrated with reference to particular embodiments, it will be appreciated by those of ordinary skill in the art that the disclosure lends itself to many different variations not specifically illustrated herein. By way of example only, certain possible variations will now be described.

In example embodiments of the present disclosure, each GRIN element may have an average refractive index that is higher than the base refractive index. In other example embodiments, each GRIN element may have an average refractive index that is lower than the base refractive index.

Whilst in the foregoing description, integers or elements are mentioned which have known obvious or foreseeable equivalents, then such equivalents are herein incorporated as if individually set forth. Reference should be made to the claims for determining the true scope of the present disclosure, which should be construed as to encompass any such equivalents. It will also be appreciated by the reader that integers or features of the disclosure that are described as advantageous, convenient or the like are optional, and do not limit the scope of the independent claims. Moreover, it is to be understood that such optional integers or features, whilst of possible benefit in some embodiments of the disclosure, may not be desirable and may therefore be absent in other embodiments.

## Claims

1. An ophthalmic lens (118, 218, 318, 418, 618, 718, 918, 1018, 1118), the lens having a layer (100, 200, 300, 400, 600, 700, 800, 900, 1000, 1100) having a base refractive index provided on a surface of the lens, and the layer comprising a plurality of gradient index optical elements (102, 202, 302, 402, 602, 702, 802, 902, 1002, 1102) that are distributed over an area of the layer; wherein each gradient index optical element is a lens, each gradient index optical element has a volume of between 100 µm³ and 3 mm³, and each gradient index optical element has a radial variation in refractive index and a transverse variation in refractive index across the element.

2. The ophthalmic lens according to claim 1, wherein the layer is provided on an anterior surface of the lens.

3. The ophthalmic lens according to claim 1 or claim 2, wherein the layer is a film that has been applied to a surface of the lens or wherein the layer is a coating provided on a surface of the lens.

4. The ophthalmic lens according to any preceding claim, wherein the lens is a spectacle lens or a contact lens, optionally, a rigid contact lens.

5. The ophthalmic lens according to any preceding claim, wherein the layer is a photopolymer layer, wherein each of the plurality of gradient index optical elements is a photocured gradient index optical element.

6. The ophthalmic lens according to any preceding claim, wherein each of the plurality of gradient index optical elements has a radially varying refractive index profile defined by a quadratic function.

7. The ophthalmic lens according to any preceding claim, wherein each of the plurality of gradient index optical elements has a diameter or width of between 10 µm and 2 mm.

8. The ophthalmic lens according to any preceding claim, wherein the plurality of gradient optical elements occupy between 20% and 80% of a surface area of the layer.

9. The ophthalmic lens according to any preceding claim, having a central region and an annular region surrounding the central region, wherein the layer that includes each of the plurality of gradient index optical elements covers a portion of the annular region, optionally, wherein a plurality of gradient index optical elements are arranged periodically around the annular region.

10. The ophthalmic lens according to claim 9, wherein the layer includes a plurality of concentric annular regions (306, 406, 606, 1006, 1106), each annular region including at least one gradient index optical element, optionally, wherein at least one gradient index optical element in a first annular region is out of phase with at least one gradient index optical element in an adjacent second annular region.

11. The ophthalmic lens according to claim 10, wherein the annular regions radially separated by a region of the layer having the base refractive power or wherein the annular regions are adjacent to each other.

12. The ophthalmic lens according to any preceding claim, wherein the layer has a thickness of between 1µm and 70µm.

13. The ophthalmic lens according to any preceding claim, further comprising an adhesive provided between the layer and the surface of the lens and/or further comprising a protective layer provided on an anterior surface of the layer that includes a plurality of gradient index optical elements.

14. A method of manufacturing an ophthalmic lens, the method comprising:
providing an ophthalmic lens; and
forming a layer on a surface of the lens, wherein the layer has a base refractive index and includes a plurality of gradient index optical elements; wherein each gradient index optical element is a lens, each gradient index optical element has a volume of between 100 µm³ and 3 mm³, and each gradient index optical element has a radial variation in refractive index and a transverse variation in refractive index across the element.

15. The method according to claim 14, wherein forming the layer comprises applying a coating or film to the surface of the lens.

16. The method according to claim 15, wherein the layer is a film and wherein the step of applying the film to the lens comprises adhering the film to the lens using an adhesive.

17. The method according to claim 15, wherein the layer is a coating, and wherein plasma coating is used to apply the layer to the lens.

## Patentansprüche

1. Eine ophthalmische Linse (118, 218, 318, 418, 618, 718, 918, 1018, 1118), wobei die Linse eine Schicht (100, 200, 300, 400, 600, 700, 800, 900, 1000, 1100) mit einem Basisbrechungsindex aufweist, die auf einer Oberfläche der Linse vorgesehen ist, und wobei die Schicht eine Vielzahl von optischen Elementen mit Brechungsindexgradienten (102, 202, 302, 402, 602, 702, 802, 902, 1002, 1102), die über einen Bereich der Schicht verteilt sind; wobei jedes optische Element mit Brechungsindexgradienten eine Linse ist, jedes optische Element mit Brechungsindexgradienten ein Volumen zwischen 100 µm³ und 3 mm³ aufweist und jedes optische Element mit Brechungsindexgradienten eine radiale Variation des Brechungsindexes und eine transversale Variation des Brechungsindexes über das Element hinweg aufweist.

2. Die ophthalmische Linse nach Anspruch 1, wobei die Schicht auf einer Vorderseite der Linse vorgesehen ist.

3. Die ophthalmische Linse nach Anspruch 1 oder Anspruch 2, wobei die Schicht ein Film ist, der auf eine Oberfläche der Linse aufgebracht wurde, oder wobei die Schicht eine auf einer Oberfläche der Linse angeordnete Beschichtung ist.

4. Die ophthalmische Linse nach einem der vorstehenden Ansprüche, wobei die Linse eine Brillenglaslinse oder eine Kontaktlinse ist, gegebenenfalls eine starre Kontaktlinse.

5. Die ophthalmische Linse nach einem der vorstehenden Ansprüche, wobei die Schicht eine Photopolymerschicht ist, wobei jedes der mehreren optischen Elemente mit Brechungsindexgradienten ein photohärtendes optisches Element mit Gradientenindex ist.

6. Die ophthalmische Linse gemäß einem der vorstehenden Ansprüche, wobei jedes der mehreren optischen Elemente mit Brechungsindexgradienten ein radial variierendes Brechungsindexprofil aufweist, das durch eine quadratische Funktion definiert ist.

7. Die ophthalmische Linse nach einem der vorstehenden Ansprüche, wobei jedes der mehreren optischen Elemente mit Brechungsindexgradienten einen Durchmesser oder eine Breite zwischen 10 µm und 2 mm aufweist.

8. Die ophthalmische Linse nach einem der vorstehenden Ansprüche, wobei die Vielzahl von optischen Elementen mit Brechungsindexgradienten zwischen 20 % und 80 % der Oberfläche der Schicht einnimmt.

9. Die ophthalmische Linse nach einem der vorstehenden Ansprüche, mit einem zentralen Bereich und einem den zentralen Bereich umgebenden ringförmigen Bereich, wobei die Schicht, die jedes der mehreren optischen Elemente mit Brechungsindexgradienten enthält, einen Teil des ringförmigen Bereichs bedeckt, wobei optional mehrere optische Elemente mit Brechungsindexgradienten periodisch um den ringförmigen Bereich herum angeordnet sind.

10. Die ophthalmische Linse nach Anspruch 9, wobei die Schicht eine Vielzahl konzentrischer ringförmiger Bereiche (306, 406, 606, 1006, 1106) umfasst, wobei jeder ringförmige Bereich mindestens ein optisches Element mit Brechungsindexgradienten enthält, wobei gegebenenfalls mindestens ein optisches Element mit Brechungsindexgradienten in einem ersten ringförmigen Bereich phasenverschoben zu mindestens einem optischen Element mit Brechungsindexgradienten in einem benachbarten zweiten ringförmigen Bereich ist.

11. Die ophthalmische Linse nach Anspruch 10, wobei die ringförmigen Bereiche radial durch einen Bereich der Schicht mit der Basisbrechkraft voneinander getrennt sind oder wobei die ringförmigen Bereiche aneinandergrenzen.

12. Die ophthalmische Linse nach einem der vorstehenden Ansprüche, wobei die Schicht eine Dicke zwischen 1 µm und 70 µm aufweist.

13. Die ophthalmische Linse nach einem der vorstehenden Ansprüche, die ferner einen Klebstoff umfasst, der zwischen der Schicht und der Oberfläche der Linse vorgesehen ist, und/oder ferner eine Schutzschicht umfasst, die auf einer Vorderseite der Schicht vorgesehen ist, die eine Vielzahl von optischen Elementen mit Brechungsindexgradienten enthält.

14. Verfahren zur Herstellung einer ophthalmischen Linse, wobei das Verfahren umfasst: Bereitstellen einer ophthalmischen Linse; und
Ausbilden einer Schicht auf einer Oberfläche der Linse, wobei die Schicht einen Basisbrechungsindex aufweist und eine Vielzahl von optischen Elementen mit Brechungsindexgradienten umfasst; wobei jedes optische Element mit Brechungsindexgradienten eine Linse ist, jedes optische Element mit Brechungsindexgradienten ein Volumen zwischen 100 µm³ und 3 mm³ aufweist und jedes optische Element mit Brechungsindexgradienten eine radiale Variation des Brechungsindexes und eine transversale Variation des Brechungsindexes über das Element hinweg aufweist.

15. Verfahren nach Anspruch 14, wobei das Ausbilden der Schicht das Aufbringen einer Beschichtung oder eines Films auf die Oberfläche der Linse umfasst.

16. Verfahren nach Anspruch 15, wobei die Schicht ein Film ist und wobei der Schritt des Aufbringens des Films auf die Linse das Anbringen des Films an der Linse unter Verwendung eines Klebstoffs umfasst.

17. Verfahren nach Anspruch 15, wobei die Schicht eine Beschichtung ist und wobei die Schicht mittels Plasmabeschichtung auf die Linse aufgebracht wird.

## Revendications

1. Lentille ophtalmique (118, 218, 318, 418, 618, 718, 918, 1018, 1118),
la lentille ayant une couche (100, 200, 300, 400, 600, 700, 800, 900, 1000, 1100) avec un indice de réfraction de base, disposée sur une surface
de la lentille, la couche comprenant plusieurs éléments optiques (102, 202, 302, 402, 602, 702, 802, 902, 1002, 1102)
répartis sur une zone de la couche, dans laquelle chaque élément optique à gradient d'indice est une lentille, et chaque élément optique à gradient d'indice a un volume compris entre 100 µm³ et 3 mm³, et chaque élément optique à gradient d'indice a une variation radiale de l'indice de réfraction et une variation transversale de l'indice de réfraction à travers l'élément.

2. Lentille ophtalmique selon la revendication 1, dans laquelle la couche est disposée sur une surface antérieure de la lentille.

3. Lentille ophtalmique selon la revendication 1 ou la revendication 2, dans laquelle la couche est un film ayant été appliqué sur une surface de la lentille ou dans laquelle la couche est un revêtement disposé sur une face de la lentille.

4. Lentille ophtalmique selon l'une quelconque des revendications précédentes, dans laquelle la lentille est une lentille de lunettes ou une lentille de contact, éventuellement une lentille de contact rigide.

5. Lentille ophtalmique selon l'une quelconque des revendications précédentes, dans laquelle la couche est une couche de photopolymère, dans laquelle chacun des plusieurs éléments optiques à gradient d'indice est un élément optique à gradient d'indice photodurci.

6. Lentille ophtalmique selon l'une quelconque des revendications précédentes, dans laquelle chacun des plusieurs éléments optiques à gradient d'indice présente un profil d'indice de réfraction radialement variable défini par une fonction quadratique.

7. Appareil ophtalmique selon l'une quelconque des revendications précédentes, dans lequel chacun des plusieurs éléments optiques à gradient d'indice a un diamètre ou une largeur comprise entre 10 µm et 2 mm.

8. Lentille ophtalmique selon l'une quelconque des revendications précédentes, dans laquelle les plusieurs éléments optiques à gradient occupent entre 20 % et 80 % d'une surface de la couche.

9. Appareil ophtalmique selon l'une quelconque des revendications précédentes, ayant une région centrale et une région annulaire entourant la région centrale, dans laquelle la couche qui comprend chacun des éléments optiques des plusieurs éléments optiques à gradient d'indice recouvre une partie de la région annulaire, éventuellement, dans laquelle plusieurs éléments optiques à gradient d'indice sont disposés périodiquement autour de la région annulaire.

10. Lentille ophtalmique selon la revendication 9, dans laquelle la couche comprend plusieurs
régions annulaires concentriques (306, 406, 606, 1006, 1106),
chaque région annulaire comprenant éventuellement un élément optique à gradient d'indice, dans laquelle l'au moins un élément optique à gradient d'indice dans une première région annulaire est déphasé par rapport à au moins un élément optique à gradient d'indice dans une seconde région annulaire adjacente.

11. Lentille ophtalmique selon la revendication 10, dans laquelle les régions annulaires sont séparées radialement par une région de la couche ayant la puissance réfractive de base ou dans laquelle les régions annulaires sont adjacentes les unes aux autres.

12. Lentille ophtalmique selon l'une quelconque des revendications précédentes, dans laquelle la couche a une épaisseur comprise entre Iµm et 70µm.

13. Lentille ophtalmique selon l'une quelconque des revendications précédentes, comprenant en outre un adhésif disposé entre la couche et la surface de la lentille et/ou comprenant en outre une couche protectrice disposée sur une surface antérieure de la couche qui comprend plusieurs éléments optiques à gradient d'indice.

14. Procédé de fabrication d'un produit ophtalmique, le procédé comprenant :
la fourniture d'une lentille ophtalmique ; et
la formation d'une couche sur une surface de la lentille, dans lequel la couche a un indice de réfraction de base et comprenant plusieurs éléments optiques à gradient d'indice ; dans lequel chaque élément optique à gradient d'indice est une lentille, chaque élément optique à gradient d'indice a un volume compris entre 100 µm³ et 3 mm³, et chaque élément optique à gradient d'indice a une variation radiale de l'indice de réfraction et une variation transversale de l'indice de réfraction à travers l'élément.

15. Procédé selon la revendication 14, dans lequel la formation de la couche comprend l'application d'un revêtement ou d'un film sur la surface de la lentille.

16. Procédé selon la revendication 15, dans lequel la couche est un film et dans lequel l'étape d'application du film sur la lentille comprend l'adhésion du film sur la lentille en utilisant un adhésif.

17. Procédé selon la revendication 15, dans lequel la couche est un revêtement, et dans lequel on utilise un traitement au plasma pour appliquer la couche sur la lentille.
